# EUROPÄISCHE PATENTANMELDUNG

(11) **EP 2 908 153 A2**
(43) Veröffentlichungstag der Anmeldung: **19.08.2015**
(21) Anmeldenummer: 15152516.9
(22) Anmeldetag: 26.01.2015
(51) Int. Cl.: G01S 15/93, G01S 7/539, G01S 15/42, G01S 15/58, G01S 15/66

(54) **Erkennung dynamischer Objekte mittels Ultraschall**

(30) Priorität: 14.02.2014 DE 102014202752
(71) Anmelder: Volkswagen Aktiengesellschaft, 38440 Wolfsburg (DE)
(72) Erfinder: Max, Dr. Stephan, 38518 Gifhorn (DE); Urban, Alexander, 38518 Gifhorn (DE); Katzwinkel, Reiner, 38527 Meine (DE); Brosig, Dr. Stefan, 29386 Hankensbüttel (DE)

(57) **Zusammenfassung**

Eine Vorrichtung zur Erkennung eines dynamischen Objekts im Umfeld eines Kraftfahrzeugs mittels Ultraschall, im Folgenden auch als ein Ultraschallsensor bezeichnet, umfasst:
- einen Sensorarray mit zumindest zwei voneinander mit einem vorgegeben Abstand angeordneten Sensorelementen, welche sowohl als Sender als auch als Empfänger wirken und auf Ultraschall basieren,
- eine Auswerteeinheit, die aus den Sendepulsen und den reflektierten Empfangspulsen Abstände zu dem Objekt und dessen Winkellage zu dem Sensorarray ermittelt, und
- eine Steuerungeinrichtung zur Steuerung der Sensorelemente und der Auswerteeinheit.

Ferner wird noch ein Verfahren zur Bestimmung dynamischer Objekte unter Verwendung der Vorrichtung beschrieben.

## Beschreibung

Die Erfindung betrifft eine Vorrichtung zur Erkennung dynamischer Objekte im Umfeld eines Kraftfahrzeugs mittels Ultraschall gemäß dem Oberbegriff des Anspruchs 1 sowie ein entsprechendes Verfahren gemäß dem Oberbegriff des Anspruchs 4.

In aktuellen Ultraschallsystemen für Kraftfahrzeuge, wie sie zum Beispiel in PDC oder PLA Systemen zum Einsatz kommen, werden bisher statische Objekte im Umfeld erkannt und gezielt vor diesen gewarnt. Dynamische Objekte im Umfeld werden nur bedingt erfasst. Besonders bei querenden Fußgängern in Kombination mit fehlenden Warnungen kann dies zu großen Problemen führen.

Dies hat im Wesentlichen zwei Ursachen:
- Die Sensorik der Seriensysteme ist lediglich in der Lage Abstände zu messen. Damit sind gerade bei bewegten Zielen Treffer von Messrauschen schwieriger zu trennen, da die Daten kaum plausibilisiert werden.
- Die Auswertung beinhaltet üblicherweise bei Ultraschallsystemen kein Tracking, welches in der Lage wäre, nach bewegten Objekten zu suchen. Mit anderen Worten, selbst bei einer fehlerfreien Messung besteht die Möglichkeit, dass dynamische Objekte nicht erkannt werden.

Die Druckschrift DE 10 2012 000 724 A1 offenbart ein Verfahren sowie eine Vorrichtung zum Fahren eines Kraftfahrzeuges mit einer teilautomatischen Fahrfunktion zur Längs- und Querführung des Kraftfahrzeugs, wobei der Fahrer des Kraftfahrzeugs die teilautomatische Fahrfunktion dauerhaft überwacht, eine Umfelderkennung des Kraftfahrzeugs durchgeführt wird, aus den Umfelddaten Verkehrsteilnehmer im Umfeld bestimmt werden, und bei aktiver teilautomatischer Fahrfunktion eine Übernahmeaufforderung mit dem Ziel der Beendigung der teilautomatischen Fahrfunktion an den Fahrer ergeht, wenn ein sich bewegendes Objekt im Umfeld des Kraftfahrzeugs ermittelt wird, welches nicht den von der Umfelderkennung bestimmten Verkehrsteilnehmern zugeordnet werden kann.

Mit anderen Worten, Objekte, die nicht anderen motorisierten Verkehrsteilnehmern durch ein Tracking zugeordnet werden können, werden vorsichtshalber als Fußgänger identifiziert und die teilautomatische Fahrfunktion muss wieder auf den Fahrer übergehen.

Die Druckschrift DE 10 2010 028 829 A1 betrifft ein Verfahren und eine Vorrichtung zur Bestimmung der Position eines Objektes relativ zu einem Fahrzeug, insbesondere einem Kraftfahrzeug, zur Verwendung in einem Fahrerassistenzsystem des Fahrzeuges. Dabei wird von einem an dem Fahrzeug angeordneten Ultraschallsensor ein erster Ultraschallpuls ausgesendet, wobei der Ultraschallpuls mehrere vorgegebene Sendefrequenzen umfasst, die zu einer Variation der Richtcharakteristik des Ultraschallsensors führen. Der ausgesendete erste Ultraschallpuls wird an dem Objekt reflektiert und als erster Echopuls durch den aussendenden oder einen anderen an dem Fahrzeug angeordneten Ultraschallsensor wieder empfangen. Anschließend wird ein Frequenzspektrum des ersten Echopulses bestimmt und in Abhängigkeit von dem Frequenzspektrum des ersten Echopulses und den Richtcharakteristiken ein erster Absolutwert eines relativen Ablagewinkels des Objektes bestimmt. Dabei können auftretende Dopplerverschiebungen sich bewegender Objekte aufgrund der bekannten Frequenzen des Sendepulses herausgerechnet werden, um die durch die Richtcharakteristik des Sendepules bedingte Winkelbestimmung korrigieren zu können.

Der Erfindung liegt daher die Aufgabe zugrunde, die Erkennung von dynamischen Objekten, insbesondere Fußgänger, im Umfeld eines Kraftfahrzeugs zu verbessern.

Diese Aufgabe wird durch eine Vorrichtung zur Erkennung dynamischer Objekte im Umfeld eines Kraftfahrzeugs mittels Ultraschall mit den Merkmalen des Anspruchs 1 sowie durch ein entsprechendes Verfahren mit den Merkmalen des Anspruchs 4 gelöst. Bevorzugte Ausführungsformen der Erfindung sind Gegenstand der Unteransprüche.

Die erfindungsgemäße Vorrichtung zur Erkennung eines dynamischen Objekts im Umfeld eines Kraftfahrzeugs mittels Ultraschall, im Folgenden auch als ein Ultraschallsensor bezeichnet, umfasst:
- einen Sensorarray mit zumindest zwei voneinander mit einem vorgegeben Abstand angeordneten Sensorelementen, welche sowohl als Sender als auch als Empfänger wirken und auf Ultraschall basieren,
- eine Auswerteeinheit, die aus den Sendepulsen und den reflektierten Empfangspulsen Abstände zu dem Objekt und dessen Winkellage zu dem Sensorarray ermittelt, und
- eine Steuereinrichtung zur Steuerung der Sensorelemente des Sensorarrays und der Auswerteeinheit.

Mit Hilfe des erfindungsgemäßen Ultraschallsensors können folglich der Abstand und die Winkellage eines Objekts im Nahbereich eines Kraftfahrzeugs und damit dessen räumliche Lage auf einfache Weise bestimmt werden.

Weiter bevorzugt ermittelt die Auswerteeinheit aus der relativen Phasenlage der empfangenen reflektierten Pulse die Winkellage des Objekts. Auch aus der Phasenlage lässt sich die Winkellage ermitteln. Wird die Winkellage sowohl über die Abstandsdifferenz als auch mittels der Phasenlage ermittelt, kann die Genauigkeit der Winkelbestimmung gesteigert werden.

Vorzugsweise weist die Vorrichtung pro Sensorelement eine Einrichtung zur Doppleranalyse der empfangenen reflektierten Pulse auf, um die Relativgeschwindigkeit des detektierten Objekts zu schätzen. Auf diese Weise kann vorteilhafterweise die Relativgeschwindigkeit zwischen Objekt und Fahrzeug unmittelbar bestimmt werden, so dass relativ schnell entschieden werden kann, ob das Objekt dynamisch ist oder statisch.

Das erfindungsgemäße Verfahren zur Erkennung von Objekten im Umfeld eines Kraftfahrzeugs mittels Ultraschall umfasst die Schritte:
- Messung von zumindest Abstand und Winkel eines Objekts im Umfeld eines Kraftfahrzeugs mit einer im Vorangegangenen erläuterten Vorrichtung,
- Tracking der ermittelten Objekte durch Erzeugen einer Trajektorie des Objekts aufgrund mehrerer Messungen sowie Ermitteln der Geschwindigkeit des Objekts aus der Trajektorie,
- Klassifizieren des Objekts aufgrund der Trajektorie sowie der Geschwindigkeit durch Vergleich mit vorgegebenen Modellen und Ermitteln einer Gefährdung, und
- Einleiten einer kraftfahrzeugseitigen Aktion bei vorliegender Gefährdung.

Auf diese Weise ist es möglich aufgrund der Historie der Messungen auch ohne Doppleranalyse durch Aufstellung des Bewegungsverlaufs des Objekts, d.h. seiner Trajektorie, die Geschwindigkeit des Objekts zu bestimmen, um eine Unterscheidung zwischen dynamischen und statischen Objekten zu ermöglichen. Ferner ermöglicht die Klassifikation oder Plausibilisierung eine Zuordnung des ermittelten Objekts zu einem Verkehrsteilnehmer, insbesondere ob es sich bei dem Verkehrsteilnehmer im Umfeld des Fahrzeugs um einen Fußgänger handelt.

Weiter bevorzugt wird eine Doppleranalyse der empfangenen reflektierten Pulse zur Ermittlung der Relativgeschwindigkeit des Objekts durchgeführt, so dass die Dynamik des ermittelten Objekts unmittelbar erkennbar ist.

Weiter bevorzugt umfassen die vorgegebenen Modelle zumindest ein Fußgängermodell und ein Radfahrermodell. Auf diese Weise werden die insbesondere bei langsamer Rückwärtsfahrt, wie dies bei einem rückwärtigem Einparken der Fall ist, besonders gefährdete Gruppen von plötzlich im Fahrweg auftauchenden Verkehrsteilnehmern abgedeckt.

Ferner kann ein Gefährdungsgrad ermittelt werden, was es vorteilhafterweise möglich macht die kraftfahrzeugseitige Aktion als Funktion des Gefährdungsgrades auszugestalten.

Weiter bevorzugt ist je nach Gefährdungsgrad die kraftfahrzeugseitige Aktion eine Fahrerwarnung und/oder ein Eingriff in die Fahrfunktion. Als Eingriff in die Fahrfunktion kann beispielsweise ein Bremseingriff und/oder ein Lenkeingriff erfolgen.

Eine bevorzugte Ausführungsform der Erfindung wird nachfolgend anhand der Zeichnungen erläutert. Dabei zeigt
- Fig. 1: eine schematische Darstellung der Umfelddetektion im Nahfeld und Fernbereich eines Kraftfahrzeugs beim Rückwärtsfahren,
- Fig. 2: die Funktionsweise der Winkelbestimmung mittels Ultraschall,
- Fig. 3: einen Ultraschallsensor zur Bestimmung von Parametern dynamischer Objekte, und
- Fig. 4: eine schematische Darstellung des Verfahrens zur Bestimmung dynamischer Objekte im Umfeld eines Kraftfahrzeugs.

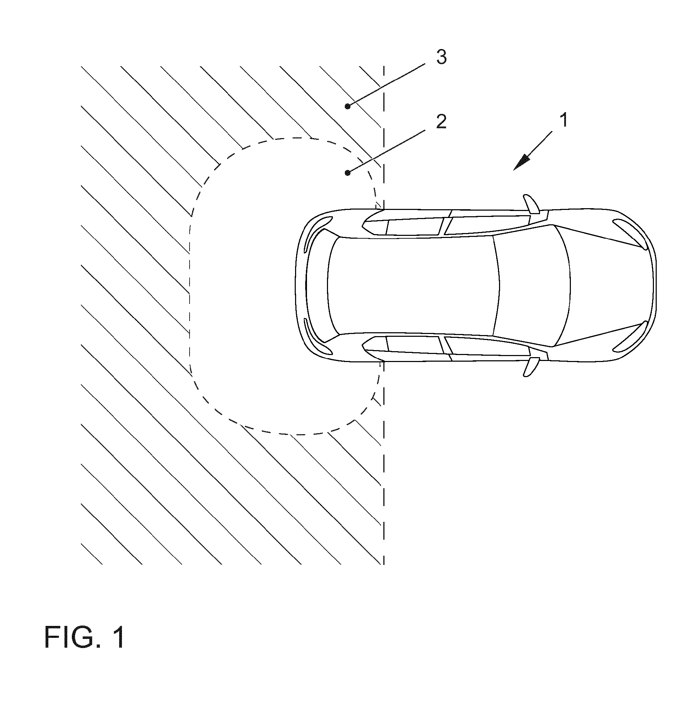

Fig. 1 zeigt die Situation der rückwärtigen Umfelddetektion eines Kraftfahrzeugs 1 am Beispiel einer Rückwärtsfahrt, beispielsweise beim Einparken. Das hier schematisch dargestellte rückwärtige Umfeld wird dabei in zwei Bereiche unterteilt, nämlich einen Nahbereich 2 und einen Fernbereich 3. Zur Überwachung des Fernbereichs 3 wird üblicherweise Radar eingesetzt und Ultraschall ist bei größeren Entfernungen nicht verwendbar. Im Fernbereich können aufgrund der Radareigenschaften Winkel, Abstand und Relativgeschwindigkeit eines Objekts bestimmt werden. Für die Überwachung des Nahbereichs 2 sind Radarsysteme nicht geeignet, hier kommen überwiegend ultraschallbasierte Systeme zum Einsatz. Konventionelle Ultraschallsysteme sind im Wesentlichen derzeit nur zur Messung von Abständen einsetzbar und dynamische Objekte wie plötzlich in den Nahbereich eintretende dynamische Objekte wie Fußgänger sind hinsichtlich des tatsächlichen Ortes und der Relativgeschwindigkeit kaum bestimmbar.

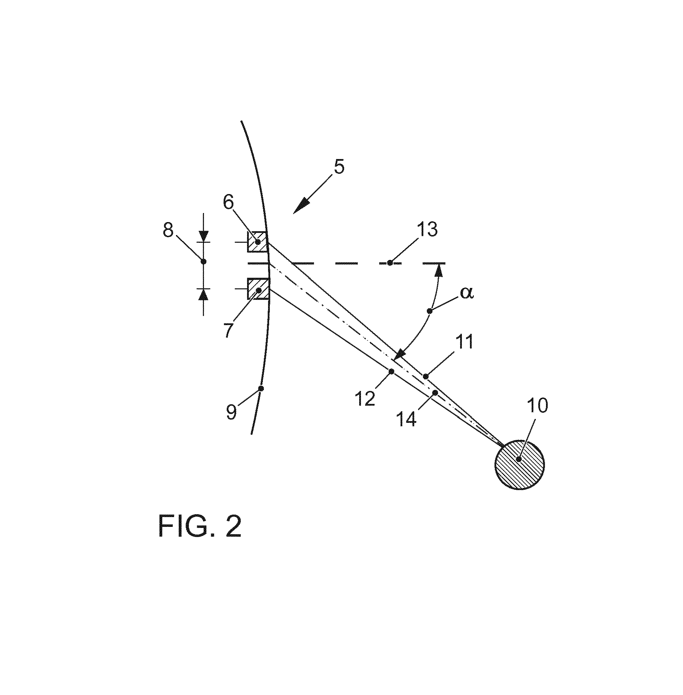

Fig. 2 zeigt in schematischer Darstellung ein Beispiel eines winkelauflösenden Ultraschallarrays 5 bestehend aus zwei benachbart angeordneten Sensorelementen 6 und 7, die unter einen vorgegebenen Abstand 8 voneinander in dem vorliegenden Beispiel in der Außenwand 9 eines Kraftfahrzeugs (nicht dargestellt) angeordnet sind. In dem in Fig. 1 erläuterten Nahbereich des Kraftfahrzeugs befindet sich ein Objekt 10, welches insbesondere dynamisch sein kann wie beispielsweise ein Fußgänger. Das Objekt ist zur senkrechten Achse 13 des Sensorarrays 5 unter einem Winkel α angeordnet, wobei der Winkel α gegeben ist durch den eingeschlossenen Winkel zwischen der Achse 13 des Sensorarrays 5 und der Verbindungslinie 14 zwischen Objekt 10 und Sensorarray 5. Zur Bestimmung des Objektwinkels muss der Sensorarray 5 mindestens zwei Sensorelemente 6, 7 aufweisen, wobei die Winkelbestimmung auf unterschiedliche Weisen durchgeführt werden können. So können die unabhängigen Abstandsmessungen der beiden Sensorelemente 6, 7 zueinander in Beziehung gesetzt werden und aus der Differenz der Abstände kann der Objektwinkel bestimmt werden. Ferner ist es möglich, dass beispielsweise das Sensorelement 6 einen Sendepuls sendet, der am Objekt 10 reflektiert wird. Der reflektierte Puls wird von beiden Sensorelementen 6, 7 detektiert und aus der unterschiedlichen Phasenlage der detektierten Pulse kann der Objektwinkel bestimmt werden. Es ist offensichtlich das die Verwendung eines Ultraschallsensorarrays 5 mit mehr als zwei Sensorelementen 6, 7 zu einer besseren Winkelauflösung führt.

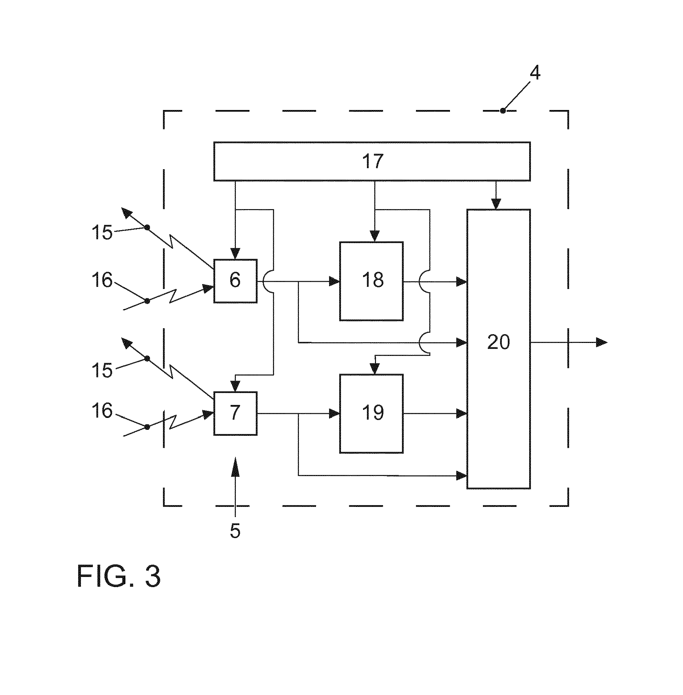

Fig. 3 zeigt ein Blockdiagramm eines Ultraschallsensors 4 zur Bestimmung dynamischer Parameter eines sich im Nahbereich 2 eines Kraftfahrzeugs 1 befindlichen dynamischen Objekts 10, wie beispielsweise einem Fußgänger. Der Ultraschallsensor 4 umfasst einen Sensorarray 5, der mindestens zwei benachbarte und mit einem vorgegebenen Abstand voneinander angeordnete Sensorelemente 6 und 7 aufweist. Dabei sind die Sensorelemente 6, 7 als Sende/Empfangseinheiten ausgelegt und emittieren Sendepulse 15 bzw. empfangen an Objekten reflektierte Pulse 16.

Die empfangenen reflektierten Pulse 16 jedes Sensorelements 6, 7 werden jeweils in einer Einrichtung zur Dopplerverarbeitung 18, 19 hinsichtlich der Abweichung von der Basisfrequenz der Sendepulse 15 untersucht und die Ergebnisse der Frequenzverschiebung jedes Sensorelements 6, 7 werden zusammen mit den entsprechenden empfangenen reflektierten Pulse 16 jedes Sensorelements 6, 7 an eine Auswerteeinheit 20 weitergeleitet. In der Auswerteeinheit 20 werden die Empfangspulse 16 und deren ermittelte Dopplerverschiebungen verarbeitet und unter Berücksichtigung der entsprechenden Sendpulse deren Laufzeiten und damit die Abstände zu einem Objekt ermittelt. Ferner können die Phasen zwischen den empfangenen Pulsen 16 der Sensorelemente 6, 7 in Korrelation zu den entsprechenden Sendepulsen 15 ermittelt werden. Aus den Abstandsunterschieden zwischen Empfangspulsen der Sensorelement 6 und 7 sowie den Phasenunterschieden korrelierten Empfangspulse 16 können die Objektwinkel zu Objekten im Nahfeld bestimmt werden. Ferner lässt sich aus den Dopplerinformationen die Relativgeschwindigkeit eines Objekts 10 im Nahfeld ermitteln. Die Auswerteeinheit gibt also bei Vorhandensein eines Objekts im Nahfeld dessen Abstand, Relativgeschwindigkeit und Objektwinkel zu einer vorgegebenen Achse des Sensorarrays 5 aus.

Zur Taktung und Steuerung des Ultraschallsensors 4 ist eine Steuereinrichtung 17 vorgesehen, die die einzelnen Komponenten, nämlich die mindestens zwei Sensorelemente 6, 7, die Dopplereinrichtungen 18, 19 sowie die Auswerteeinrichtung 20 ansteuert.

In der einfachsten Form umfasst der Ultraschallsensor einen Sensorarray 5 mit zwei Sensorelementen 6, 7, eine Auswerteeinrichtung 20 sowie eine Steuereinrichtung 20. Mit dieser Basisausführung können folglich Abstände und Objektwinkel bestimmt werden. Aufgrund des Fehlens einer Dopplerauswertung der empfangenen reflektierten Pulse 16 durch die entsprechenden Dopplereinrichtungen 18, 19 können keine direkten Relativgeschwindigkeiten ermittelt werden.

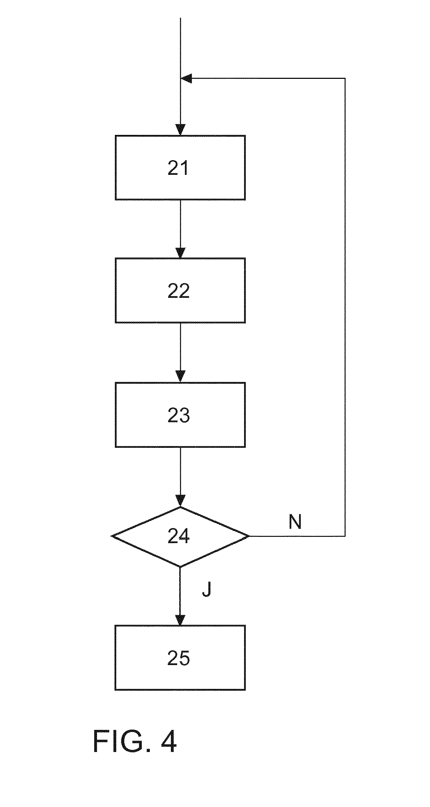

Fig. 4 zeigt in schematischer Form den Ablauf des Verfahrens zu Bestimmung dynamischer Objekte, insbesondere Fußgänger in einem Nahbereich eines Kraftfahrzeugs mittels Ultraschallsensorik.

In einem ersten Schritt 21, dem Messungs-Schritt, erfolgt das Vermessen und Detektieren von Objekten im Nahbereich eines Kraftfahrzeugs mittels der erläuterten Ultraschallsensorik, wobei das Vermessen des Nahbereichs mit zumindest einem der im Vorangegangenen Ultraschallsensoren erfolgt, wobei zumindest ein Ultraschallsensor 4 mit der "Basisausstattung" notwendig ist. Dieser Messungs-Schritt ergibt daher zumindest den Abstand eines Objekts im Nahbereich und dessen Objektwinkel zum Ultraschallsensor, so dass die Position des Objekts im Nahbereich feststeht. Falls eine Doppleranalyse erfolgt, kann bereits jetzt entscheiden werden, ob es sich um ein statisches oder dynamisches Objekt handelt und die Relativgeschwindigkeit kann bestimmt werden.

Im nachfolgenden Tracking-Schritt 22 werden die zeitlichen und räumlichen Veränderungen der Positionen der detektierten Objekte nachverfolgt, d.h. getrackt, indem die fortlaufend anfallenden Ergebnisse des Messungs-Schrittes 21 gespeichert, analysiert und zusammengeführt werden. Es ergibt sich auf diese Weise der Bewegungsverlauf oder die Trajektorie der detektierten Objekte im Nahbereich des Kraftfahrzeugs, aus dem sich auch ohne Dopplerverfahren die Geschwindigkeiten der getrackten Objekte ableiten lassen. Dabei ist es für diese Betrachtung unerheblich, ob die Trajektorien im Fahrzeugkoordinatensystem oder im fahrbahnfesten Koordinatensystem erzeugt und betrachtet werden.

Die Ergebnisse des Tracking-Schrittes 22 werden in einem Objektklassifikationsschritt 23 weiter analysiert. Dabei erfolgt ein Vergleich der Daten mit vorgegebenen unterschiedlichen Modellen. So ist das Bewegungsverhalten und Geschwindigkeitsverhalten eines Radfahrers deutlich unterschiedlich zu dem eines Fußgängers. Die Trajektorie eines Radfahrers weist üblicherweise ein stetig differenzierbares Verhalten auf und insbesondere abrupte Richtungsänderungen sind nicht üblich. Demgegenüber ist die Trajektorie eines Fußgängers zwar im Wesentlichen stetig aber nicht unbedingt differenzierbar, da Fußgänger abrupte Richtungsänderungen vornehmen können. Ferner bewegt sich die Geschwindigkeit eines Fußgängers üblicherweise in einem engen Geschwindigkeitsintervall von 0 bis 5 km/h, so dass dynamische Objekte, die dieses Geschwindigkeitsintervall zeigen, mit einiger Wahrscheinlichkeit Fußgänger sind.

Es können daher für dynamische Objekte im Nahbereich wie Fußgänger, Radfahrer, Jogger oder Ähnliches anhand deren Bewegungsmuster Modelle formuliert und mit den ermittelten Ergebnissen des Tracking-Schrittes verglichen werden. Anhand des Vergleichs kann das ermittelte Objekt klassifiziert werden und ferner ermittelt werden, ob das Objekt eine Gefahr für das Fahrzeug darstellt bzw. ob das klassifizierte Objekt durch das Fahrzeug gefährdet wird.

In einer Abfrage 24 wird ermittelt, ob eine Gefährdung vorliegt. Ist dies nicht der Fall, so geht das Verfahren wieder zum Anfang zurück. Liegt eine Gefährdung vor, so wird eine Aktion 25 veranlasst. Je nach Grad der Gefährdung kann beispielsweise eine Warnung an den Fahrer erfolgen oder es wird ein geeigneter Bremsvorgang eingeleitet.

Mit anderen Worten, durch die Betrachtung der durch das Tracking 22 erzeugten Trajektorien einschließlich der Geschwindigkeiten der detektierten Objekte und dem Vergleich mit unterschiedlichen vorgegebenen Modellen wird eine Plausibilisierungsbetrachtung durchgeführt, anhand der ein detektiertes dynamisches Objekt aufgrund seines Verhaltens plausibel beispielsweise als Fußgänger identifiziert werden kann.

### Bezugszeichenliste

- 1: Fahrzeug
- 2: Rückwärtige Nahbereich
- 3: Rückwärtige Fernbereich
- 4: Ultraschallsensor
- 5: Sensorarray
- 6: Sensorelement 1
- 7: Sensorelement 2
- 8: Abstand
- 9: Fahrzeugwand
- 10: Objekt
- 11: Laufweg Sensorelement 1 - Objekt
- 12: Laufweg Sensorelement 2 - Objekt
- 13: Senkrechte
- 14: Objektrichtung
- 15: Sendepuls
- 16: Empfangspuls
- 17: Steuereinrichtung
- 18: Doppleranalyse
- 19: Doppleranalyse
- 20: Auswertungseinheit
- 21: Messen
- 22: Tracking
- 23: Objektklassifikation
- 24: Abfrage
- 25: Aktion

- α: Winkel
- N: Nein
- J: Ja

## Patentansprüche

1. Vorrichtung (4) zur Erkennung eines dynamischen Objekts (10) im Umfeld eines Kraftfahrzeugs (1) mittels Ultraschall, **dadurch gekennzeichnet, dass** die Vorrichtung (4) aufweist:
einen Sensorarray (5) mit zumindest zwei voneinander mit einem vorgegeben Abstand angeordneten Sensorelementen (6, 7), welche sowohl als Sender als auch als Empfänger wirken und auf Ultraschall basieren,
eine Auswerteeinheit (20), die aus den Sendepulsen und den reflektierten Empfangspulsen (16) Abstände zu dem Objekt (10) und dessen Winkellage zu dem Sensorarray (5) ermittelt, und
eine Steuereinrichtung (17) zur Steuerung der Sensorelemente (6,7) und der Auswerteeinheit (20).

2. Vorrichtung (4) nach Anspruch 1, **dadurch gekennzeichnet, dass** die Auswerteeinheit aus der relativen Phasenlage der empfangenen reflektierten Pulse (16) die Winkellage des Objekts (10) ermittelt.

3. Vorrichtung nach einem der vorangegangenen Ansprüche, **dadurch gekennzeichnet, dass** die Vorrichtung pro Sensorelement (6, 7) eine Einrichtung (15, 16) zur Doppleranalyse der empfangenen reflektierten Pulse (16) aufweist, um die Relativgeschwindigkeit des detektierten Objekts (10) zu schätzen.

4. Verfahren zur Erkennung eines dynamischen Objekts (10) im Umfeld eines Kraftfahrzeugs mittels Ultraschall mit den Schritten:
Messung (21) von zumindest Abstand und Winkel eines Objekts (10) im Umfeld eines Kraftfahrzeugs mit einer Vorrichtung nach einem der vorangegangenen Ansprüche,
Tracking (22) des ermittelten Objekts (10) durch Erzeugen einer Trajektorie des Objekts (10) aufgrund mehrerer Messungen sowie Ermitteln der Geschwindigkeit des Objekts (10) aus der Trajektorie,
Klassifizieren des Objekts (10) aufgrund der Trajektorie sowie der Geschwindigkeit durch Vergleich mit vorgegebenen Modellen und Ermitteln einer Gefährdung, und Einleiten einer kraftfahrzeugseitigen Aktion bei vorliegender Gefährdung.

5. Verfahren nach Anspruch 4, **dadurch gekennzeichnet, dass** eine Doppleranalyse der empfangenen reflektierten Pulse (16) zur Ermittlung der Relativgeschwindigkeit des Objekts (10) durchgeführt wird.

6. Verfahren nach einem der Ansprüche 4 oder 5, **dadurch gekennzeichnet, dass** die vorgegebenen Modelle zumindest ein Fußgängermodell und ein Radfahrermodell umfassen.

7. Verfahren nach einem der Ansprüche 4 bis 6, **dadurch gekennzeichnet, dass** ein Gefährdungsgrad ermittelt wird.

8. Verfahren nach Anspruch 7, **dadurch gekennzeichnet, dass** die kraftfahrzeugseitige Aktion eine Funktion des Gefährdungsgrades ist.

9. Verfahren nach Anspruch 8, **dadurch gekennzeichnet, dass** je nach Gefährdungsgrad die kraftfahrzeugseitige Aktion eine Fahrerwarnung und/oder ein Eingriff in die Fahrfunktion ist.
